# EUROPEAN PATENT SPECIFICATION

(11) **EP 1 373 968 B1**
(45) Date of publication and mention of the grant of the patent: **25.08.2004**
(21) Application number: 02718709.5
(22) Date of filing: 03.04.2002
(51) Int. Cl.: G02B 27/14, G02B 5/10, G02B 23/00

(54) **STARSEPARATOR**
STERNTRENNER
SEPARATEUR DE FAISCEAU

(30) Priority: 06.04.2001 NL 1017786
(43) Date of publication of application: 02.01.2004
(73) Proprietor: Nederlandse Organisatie voor Toegepast-Natuurwetenschappelijk Onderzoek TNO, 2628 VK Delft (NL)
(72) Inventor: NIJENHUIS, Jan, Roelof, NL-2625 LM Delft (NL)
(74) Representative: Prins, Adrianus Willem, Mr. Ir.
(86) International application number: PCT/NL2002/000218
(87) International publication number: WO 2002/082167

(56) References cited:
- GB-A- 2 188 166
- BECKERS J M: "DIFFERENTIAL ADAPTIVE OPTICS FOR ASTRONOMICAL INTERFEROMETRY" APPLIED OPTICS, OPTICAL SOCIETY OF AMERICA,WASHINGTON, US, vol. 30, no. 34, 1 December 1991 (1991-12-01), pages 5010-5011, XP000241664 ISSN: 0003-6935

## Description

The invention relates to an optical system, more particularly to an optical system used in telescopes and which system is capable of splitting an output beam of a telescope into two separate channels and tracking an astronomical object under investigation that is moving in the focal field of the telescope.

A telescope with such a beam splitting and tracking function is desired in the ESO programme (European Southern Observatory), which has developed a project called the Very Large Telescope. The ESO Very Large Telescope consists of four 8-meter telescopes which can work independently or in combined mode. In this latter mode the VLT provides the total light collecting power of a 16 meter single telescope. The four 8-m telescopes (also referenced as unit telescopes or UT) are supplemented with 3 auxiliary 1 m telescopes (referenced as auxiliary telescopes or AT). Used in interferometric mode the telescope may provide high angular resolution imaging. The useful wavelength range extends from the near IR up to 25 microns in the infrared.

One of the requirements of this project is the need for field separation or beam splitting of the output beams of the different UT. This field separation is needed for analysis of simultaneous interferometric observations of two objects - each with a size of at most 2 arcsec - that are separated by up to 1 arcmin, without requiring a large continuous field of view. In such an analysis, the brighter object, the primary star, will be used as a reference star for fringe tracking while the other object, the secondary star or planet, will usually be the science target.

The need for a reference star in interferometry is similar to the need of a reference star in adaptive optics. Due to atmospheric turbulence, the fringe pattern in a telescope interferometer shows a dynamic behaviour that is very similar to that of the image centroid in a single aperture telescope. This means that the fringe pattern is smeared out after a few 100 msec depending on the observed wavelength. In order to freeze the fringe pattern, the maximum exposure time is limited to a few 10 msec (at 2 µm) and, thus, the ability to observe faint astronomical objects is severely limited. If a bright reference star within the isoplanatic angle of the science object is used to measure the fringe position and then to stabilise the fringes in a closed loop system, the scientific camera can integrate for many seconds on the science object extending the sensitivity by many magnitudes.

By using this technique, the sensitivity can be increased such that faint astronomical objects can be observed.

In a conventional arrangement of a telescope, it is only possible to analyze in detail a star that is located in the center of the focal field, since, due to the earth rotation, the focal field of the telescope, wherein part of the sky under observation is imaged as a disk, rotates around the center.

Therefor, for analyzing the light of two separate stars, an optical system is required for splitting the beam into two separate beams. This system must be located in the focal field of the telescope, since only there, the light of the two objects is spatially separated; in other parts of the trajectory this light is overlapping. The optical system, also named "Star separator" must be therefor be located in the foci of the UTs and ATs and must feed two arbitrary objects from the focal field into two separate channels. The channels are specially designed to guide the two beams in parallel from the Star Separator to a beam combination laboratory. This means that the optical paths of the two stars are separated over about 200m of travel. A need exists to optimize the design for such a star separator, since prior art systems all suffer from great complexity, wherein it is almost technically impossible to control the dynamics of the required optical elements.

The present invention aims to solve existing problems with optical systems to be able to provide an optical system that is capable of splitting an output beam of a telescope into two separate channels.

In accordance with the invention, the above goal is reached by an optical system for splitting an output beam of a telescope, said system comprising: a first optical element M10 for splitting the output beam at a first focal field into two separate beams, and a second optical element M11 placed in at least one of the split beams, said optical element M11 being movable, so that a moving position of an object in the focal field can be imaged on a fixed position.

Preferably, the first optical element M10 images the pupil of the telescope onto second optical element M11. In this way, M11 is reduced to a minimal dimension, wherein at the same time an optimal light yield is provided.

Preferably, the first optical element is a splitting mirror M10, said splitting mirror comprising two adjoining concave spherical sections which have mutually non-coincident focal points In splitting mirror M10, the function of splitting the focal field and imaging the pupil of the telescope are combined. In a further preferred embodiment, the splitting mirror M10 is a single piece mirror. M10 can be manufactured with a high degree of precision, and since no moving parts are present, the split line of the mirror can be very sharp and precise. In practice, by the fixed arrangement of M10, a beam with a diameter of 130 µm can be split, the splitting line having a curvature of 13 µm. With the layout of M10, the input beam is split into two sections: a left-hand and a right-hand section. A star mapped in one of the two channels, crossing a vertical split line between the two concave spherical sections will therefor be mapped in the other of the two channels.

For optimal tracking of the astronomical object under investigation, the optical element M11 is provided with actuating means for tilting M11 around two orthogonal lateral axes.

By adjusting the orientation of M11, it is possible to provide "beam chopping", i.e. providing a slightly oscillating beam. The same actuating means is used for tracking (i.e. redirecting the beam from the astronomical object under investigation to a fixed second focal point) an astronomical object under investigation rotating in the Coudé field. Thus, M11 can be controlled to map the astronomical object under investigation at precisely a desired location. M11 is able to direct precisely the region of interest in the Coudé field to a fixed location. The mirror sections used therefor remain the same. Therefor, there are no losses of light and no over-sizing is needed. Also, since the mirrors may be relatively small the weight of the mirrors can be reduced.

In still a further preferred embodiment, the system according to the invention further comprises a third optical element M12 for re-imaging said astronomical object in the focal point of a parabolic mirror M14. In this way, a substantially collimated beam is provided, which can be directed towards a laboratory for analyzing the object under investigation. Such a laboratory may be remote, for instance, several tens of meters.

Preferably, the third optical element comprises an elliptical optical element M12. By using an elliptical element M12 the focal distance of the beam can be shortened. Therefor, a much more compact design is possible.

In yet a further preferred embodiment, a fourth optical element M13 re-images the pupil in the output beam of the parabolic mirror M14. The fourth optical element may be movable. In this way the output beam is moved laterally. The optical element M13 may be provided with actuating means for adjusting the orientation of the beam into two mutually orthogonal directions.

The optical elements M10-M14 are preferably mounted in one single plane. By reducing the alignment to a single plane, greater mechanical simplicity can be provided. With use of detachable mounts, preferably kinematic mounts, the optical elements can be assembled at a remote place and shipped in one piece to the telescope. Preferably elements M10-M14 are reflective optical elements, for optimal light yield and optical characteristics.

The elliptical element M12 may be axially adjustable. In this way, the focal point of the elliptical element can be located optimally, compensating for imaging errors of M10 and thermal effects.

At least one of the optical elements M10-M14 may be provided with actuating means adjustable in open loop steering. The actuating means are controlled via a look up table. During testing the mechanisms will be characterized and the required optical corrections will be measured. By using a look-up table a control system is able to direct the mechanism in the requested position. In this way, the elements may be controlled remotely, and their proper mutual orientation can be readily achieved.

In still another embodiment, at least one of the optical elements M10-M14 may be interchangeable. In this way, different optical characteristics may be provided. For instance, by using the same optical layout M10-M14, but giving M13 a different optical characteristics, the pupil can be relocated in the output beam, so that the system can be adapted for the Unit Telescope and the Auxiliary Telescopes respectively. Preferably M13 is a spherical mirror with a radius of about 20 mm for the auxiliary telescopes, and about 27 mm for the unit telescopes. The diameter of M13 is approximately 10 mm for AT and 20 mm for UT. This allows the pupil to be re-imaged in the collimated output beam at approximately 88 m. To provide a lateral movement of the output beam, M13 may be tiltable around two orthogonal axes perpendicular to the radius of the mirror. Alternatively, M13 may be translatable in the direction of said two orthogonal axes.

Further, preferably, at least two optical elements M10', M10" are mounted on a translatable platform, said optical elements M10', M10", when in mounting position, reflecting the output beam of the telescope into mutually opposite channels. This layout provides an easy way of switching the split beams into opposite channels.

Further, a thermal invariant is possible, if the mirrors and mounts are fully manufactured from aluminium.

The invention also relates to a method of splitting an output beam of a telescope and tracking an astronomical object under investigation moving in the focal field of the telescope, comprising the steps of: splitting the beam in the focal field of a telescope into two split beams; in one of said split beams, imaging the pupil of the telescope on a movable mirror; calculating the movement of the astronomical object under investigation; and outputting control commands for moving said mirror so that a moving position of an astronomical object in the focal field is imaged on a fixed position in a second focal field.

Further, the invention is related to a computer, comprising processing means, adapted for: calculating the movement of the astronomical object under investigation; and outputting control commands for moving a movable mirror in a system according any of claims 1- 16, so that a moving position of an astronomical object in the focal field is imaged on a fixed position in a second focal field.

The invention will further be elucidated with reference to the accompanying drawings, wherein:
Fig. 1 shows a perspective view of an optical system according to the invention; and
Fig. 2 shows a schematic arrangement of part of the system of fig. 1.

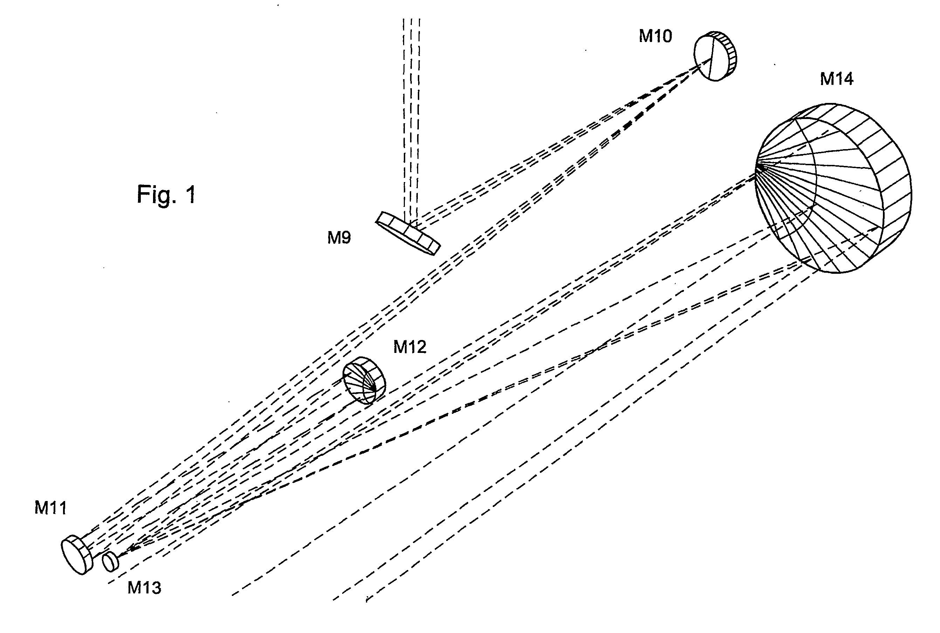

In fig. 1, a first dichroic mirror M9 is located in front of the Coudé focus of an output telescope, i.e. upstream towards the telescope. The mirror M9 is used to allow only a selected range of wavelength to be fed into the star separator. A first field splitting reflective element M10 is located at the Coudé focal point of the telescope. The telescope itself is not depicted, but it may be any kind of telescope, in fact, the star separator may also be used for different focal points such as a Nasmyth focal point or a Cassegrain focal point. The field splitting reflective element M10 splits the focal field of the telescope into a first and a second channel. In fig. 1 only one such channel is depicted by dotted lines, illustrating the beam path from a beam emanating from the telescope and fed into the star separator. The field splitting element M10 preferably comprises two adjoining concave spherical sections which have mutually non-coincident focal points. The mirror is equipped with a kinematic mount. This will enable dismounting or remounting of the mirror without danger to disturb the alignment. M10 is preferably made from a single piece material for optimal thermal characteristics. This material may be aluminium.

The optical elements M9-M14 are all located in substantially the same plane, since they are mounted on a single base plate. In this way, the mirrors can be assembled at a remote place and shipped in one piece to the telescope.

Further, the design according to fig. 1 provides the advantage of a more compact arrangement by introducing elliptical reflective element M12, which re-images the focal point of M10 into M13. Therefor, the focal distance is substantially reduced and a much more compact design is feasible. Further, in this design, by choosing an appropriate curvature of the spherical sections of M10, the pupil is re-imaged on M11. Therefor, there are no losses of light and no over-sizing is needed. Also, no heavy mirrors are required and the mirrors may be relatively small.

M11 is equipped with an actuator providing a tilting movement in the horizontal and vertical plane with respect to the base plate. By tilting or rotating the mirror with respect to said orthogonal axes, an astronomical object under investigation can be tracked. In addition, "beam chopping" can be provided, i.e. providing a beam with a slightly oscillating output beam. M11 acts as a "folding mirror" which redirects the beam of the telescope towards M12. M12 re-images the focal point of M10 on spherical mirror M13 with a curvature radius of about 20 mm for the auxiliary telescopes, and about 27 mm for the unit telescopes. For precise imaging, the position of M12 is equipped with an actuating mechanism providing axial adjustment. The diameter of M13 is approximately 10 mm for AT and 20 mm for UT. M13 is located at the focal point of parabolic mirror M14, so the reflected image of M13 is imaged as a substantially collimated beam. By providing a proper curvature to M13, the pupil is re-imaged in the collimated output beam at approximately 88 m. To provide a lateral movement of the output beam, M13 is provided with an actuator to tilt M13 around two orthogonal axes perpendicular to the radius of the mirror. Alternatively, M13 may be provided with an actuator to translate M13 in the direction of said two orthogonal axes.

The actuators of M11, M12 and M13 are preferably controlled via a look-up table. During testing the mechanisms will be characterized and the required optical corrections will be measured. By using a look-up table a control system is able to direct the mechanism in the requested position.

Although each of the mirrors M9-M14 are replaceable, special provisions can be provided to replace M10 and M13. For instance M10 can be replaced by another mirror that images the beam into the opposite channel. Such provisions may be a translatable platform, for instance a carrousel of mirrors. Since M10 can be fitted with a kinematic mount, the re-positioning accuracy is sufficiently high, at least in the order of 1 µm. M13 is preferably replaceable, to compensate for different focal distances from a Unit Telescope or an Auxiliary Telescope. Therefor, for different telescopes, the same arrangement of mirrors M9-M14 can be used, except for mirror M13, readjusting the pupil position in the output beam to a desired distance.

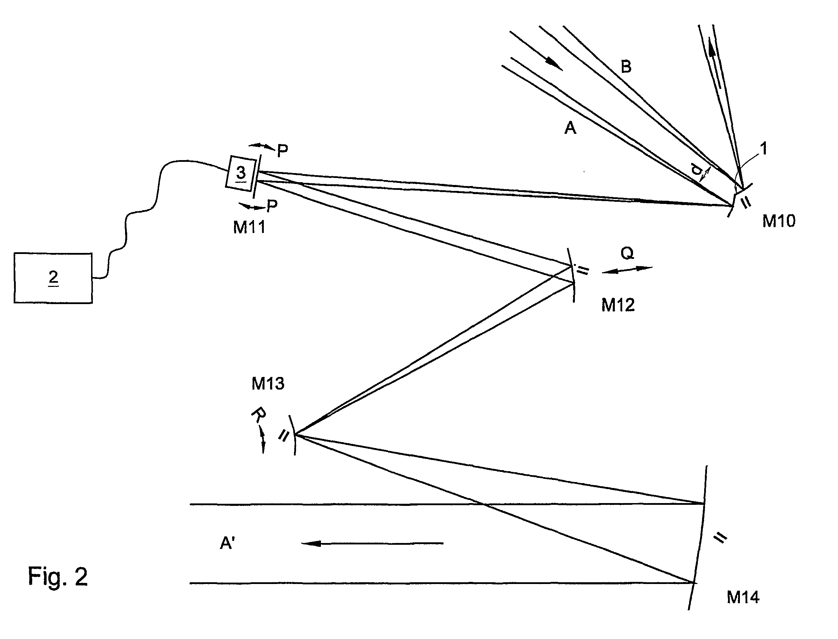

In fig. 2, somewhat more schematic than in fig. 1, the ray-path of a beam, incident on the splitting mirror is illustrated. M10 is located in the focal point of the telescope, which means that two neighbouring stars A and B are imaged in focus on splitting mirror M10, on either side of the split line 1. The distance d of the stars in the focal field of the beam is very small, in practice the diameter may be in the order of 130 µm. Both stars A and B are reflected in separate channels, only one of the channels is illustrated. The channels can be designed identically. By providing M10 with a proper curvature, the pupil of the telescope is imaged at the position of M11, which is a flat tiltable mirror.

Arrow P illustrates a tilting movement around an axis perpendicular to the plane of the drawing. Likewise, the mirror is tiltable around an axis in the plane of drawing, in the lateral direction of the beam path. Star A is moving circularly in the focal field on M10, due to the rotation of the earth. This circular movement can be tracked by the tilting mirror M10, so that the moving position of the star A is imaged on a fixed position by M12 in M13.

Computer 2 is present usually, on a remote location, comprising processing means, adapted for: calculating the movement of the astronomical object under investigation; and outputting control commands to actuator 3 for moving M11, so that a moving position of an astronomical object in the focal field is imaged on a fixed position in a second focal field.

M12 is an elliptical mirror, that is axially movable, indicated by arrow Q. In this way, the focal points of the beams can be properly directed, compensating for small errors, due to curvature and temperature effects. M12 reduces the focal distance, so the optical arrangement can be compacted considerably.

M13 is tiltable in the same directions of M11, illustrated by arrow R. By tilting the mirror along R, the lateral position of the beam can be adjusted. M13 is provided with a proper curvature, so that the pupil position is controlled axially in the output beam A'. Output beam A' is a substantially collimated beam, provided by parabolic mirror M14, in which focal point M13 is positioned. Alternatively, since M13 is a spherical mirror, the same lateral movement of the output beam may be provided by translating M13 in the direction of said two orthogonal axes.

It will be clear to those skilled in the art that the invention is not limited to the exemplary embodiments described with reference to the drawings but may comprise all kinds of variations thereof. Such variations are deemed to fall within the scope of protection of the appended claims.

## Claims

1. Optical system for splitting an output beam of a telescope and tracking an astronomical object under investigation that is moving in the focal field of the telescope, **characterised in that** the system comprises a first optical element M10 for splitting the output beam at a first focal field into two separate beams, and a second optical element M11 placed in at least one of the split beams, said optical element M11 being movable, so that a moving position of an object in the focal field can be imaged on a fixed position.

2. Optical system according to claim 1, **characterised in that** the first optical element M10 images the pupil of the telescope onto second optical element M11.

3. Optical system according to claim 1 or 2, **characterized in that** the first optical element is a splitting mirror M10, said splitting mirror comprising two adjoining concave spherical sections which have mutually non-coincident focal points.

4. Optical system according to any of the preceding claims, **characterized in that** the splitting mirror M10 is a single piece mirror.

5. Optical system according to any of the preceding claims, **characterized in that** the optical element M11 is provided with actuating means for tilting M11 around two orthogonal lateral axes.

6. Optical system according to any of the preceding claims, **characterized in that** the system further comprises a third optical element M12 for re-imaging said astronomical object in the focal point of a parabolic mirror M14.

7. Optical system according to any of the preceding claims, **characterized in that** the third optical element comprises an elliptical optical element M12.

8. Optical system according to any of the preceding claims, **characterized in that** a fourth optical element M13 re-images the pupil in the output beam of the parabolic mirror M14.

9. Optical system according to claim 7, **characterized in that** the fourth optical element M13 is provided with actuating means for adjusting the orientation of the beam into two mutually orthogonal directions.

10. Optical system according to any of the preceding claims, **characterized in that** the optical elements M10-M14 are mounted in one single plane.

11. Optical system according to any of the preceding claims, **characterized in that** the elements M10-M14 are reflective optical elements.

12. Optical system according to any of the preceding claims, **characterized in that** the elliptical element M12 is axially adjustable.

13. Optical system according to any of the preceding claims, **characterized in that** at least one of the optical elements M10-M14 is provided with actuating means adjustable in open loop steering.

14. Optical system according to claim 12, **characterized in that** the actuating means are controlled via a look up table.

15. Optical system according to any of the preceding claims, **characterized in that** at least one of the optical elements M10-M14 is interchangeable.

16. Optical system according to any of the preceding claims, **characterized in that** at least two optical elements M10', M10" are mounted on a translatable platform, said optical elements M10', M10", when in mounting position, reflecting the output beam of the telescope into mutually opposite channels.

17. Method of splitting an output beam of a telescope and tracking an astronomical object under investigation moving in the focal field of the telescope, comprising the steps of:
- splitting the beam in the focal field of a telescope into two split beams;
- in one of said split beams, imaging the pupil of the telescope on a movable mirror;
- calculating the movement of the astronomical object under investigation; and
- outputting control commands for moving said mirror so that a moving position of an astronomical object in the focal field is imaged on a fixed position in a second focal field.

18. Computer, comprising processing means, adapted for:
- calculating the movement of the astronomical object under investigation; and
- outputting control commands for moving the second optical element M11 in a system according any of claims 1- 16, so that a moving position of an astronomical object in the focal field is imaged on a fixed position in a second focal field.

## Patentansprüche

1. Optisches System zum Teilen eines Ausgangsstrahls eines Teleskops und zum Verfolgen eines in Untersuchung befindlichen astronomischen Objektes, das sich in dem Bildfeld des Teleskops bewegt, **dadurch gekennzeichnet, dass** das System ein erstes optisches Element M10 zum Teilen des Ausgangsstrahls an einem ersten Bildfeld in zwei getrennte Strahlen und ein zweites optisches Element M11 aufweist, das in wenigstens einem der geteilten Strahlen platziert ist, wobei das optische Element M11 beweglich ist, so dass eine sich bewegende Position eines Objektes in dem Bildfeld auf eine feststehende Position abgebildet werden kann.

2. Optisches System nach Anspruch 1, **dadurch gekennzeichnet, dass** das erste optische Element M10 die Pupille des Teleskops auf das zweite optische Element M11 bildet.

3. Optisches System nach Anspruch 1 oder 2, **dadurch gekennzeichnet, dass** das erste optische Element ein Teilerspiegel M10 ist, wobei der Teilerspiegel zwei aneinandergrenzende, konkav sphärische Abschnitte hat, die nicht miteinander zusammenfallende Brennpunkte haben.

4. Optisches System nach einem der vorhergehenden Ansprüche, **dadurch gekennzeichnet, dass** der Teilerspiegel M10 ein einstückiger Spiegel ist.

5. Optisches System nach einem der vorhergehenden Ansprüche, **dadurch gekennzeichnet, dass** das optische Element M11 mit einer Betätigungseinrichtung zum Kippen von M11 um zwei orthogonale Achsen versehen ist.

6. Optisches System nach einem der vorhergehenden Ansprüche, **dadurch gekennzeichnet, dass** das System weiter ein drittes optisches Element M12 zum Wiederabbilden des astronomischen Objekts im Brennpunkt eines Parabolspiegels M14 aufweist.

7. Optisches System nach einem der vorhergehenden Ansprüche, **dadurch gekennzeichnet, dass** das dritte optische Element ein elliptisches optisches Element M12 aufweist.

8. Optisches System nach einem der vorhergehenden Ansprüche, **dadurch gekennzeichnet, dass** ein viertes optisches Element M13 die Pupille in dem Ausgangsstrahl des Parabolspiegels M14 wieder abbildet.

9. Optisches System nach Anspruch 7, **dadurch gekennzeichnet, dass** das vierte optische Element M13 mit einer Betätigungseinrichtung zum Einstellen der Orientierung des Strahls in zwei zueinander orthogonalen Richtungen versehen ist.

10. Optisches System nach einem der vorhergehenden Ansprüche, **dadurch gekennzeichnet, dass** die optischen Elemente M10 - M14 in einer einzigen Ebene angebracht sind.

11. Optisches System nach einem der vorhergehenden Ansprüche, **dadurch gekennzeichnet, dass** die Elemente M10 - M14 reflektierende optische Elemente sind.

12. Optisches System nach einem der vorhergehenden Ansprüche, **dadurch gekennzeichnet, dass** das elliptische Element M12 axial einstellbar ist.

13. Optisches System nach einem der vorhergehenden Ansprüche, **dadurch gekennzeichnet, dass** wenigstens eines der optischen Elemente M10 - M14 mit einer Betätigungseinrichtung versehen ist, die in einem offenen Regelkreis steuerbar ist.

14. Optisches System nach Anspruch 12, **dadurch gekennzeichnet, dass** die Betätigungseinrichtung über eine Nachschlagetabelle gesteuert wird.

15. Optisches System nach einem der vorhergehenden Ansprüche, **dadurch gekennzeichnet, dass** wenigstens eines der optischen Elemente M10 - M14 austauschbar ist.

16. Optisches System nach einem der vorhergehenden Ansprüche, **dadurch gekennzeichnet, dass** wenigstens zwei optische Elemente M10', M10" auf einer verschiebbaren Plattform angebracht sind, wobei die optischen Elemente M10', M10", wenn sie sich in der Installationsposition befinden, den Ausgangsstrahl des Teleskops in zueinander entgegengesetzte Kanäle reflektieren.

17. Verfahren zum Teilen eines Ausgangsstrahls eines Teleskops und zum Verfolgen eines in Untersuchung befindlichen astronomischen Objekts, das sich im Bildfeld des Teleskops bewegt, wobei bei dem Verfahren:
der Strahl in dem Bildfeld des Teleskops in zwei aufgespaltene Strahlen geteilt wird,
in einem der aufgespaltenen Strahlen die Pupille des Teleskops auf einen beweglichen Spiegel abgebildet wird,
die Bewegung des in Untersuchung befindlichen astronomischen Objekts berechnet wird,
Kontrollbefehle zur Bewegung des Spiegels ausgegeben werden, so dass eine bewegende Position eines astronomischen Objektes in dem Bildfeld auf eine feststehende Position in einem zweiten Bildfeld abgebildet wird.

18. Computer, der Prozessoreinrichtungen aufweist, die vorbereitet sind, um die Bewegung des in Untersuchung befindlichen astronomischen Objektes zu berechnen, und Kontrollbefehle zum Bewegen des zweiten optischen Elements M11 in einem System nach einem der Ansprüche 1 bis 16 so zu bewegen, dass eine sich bewegende Position des astronomischen Objektes im Bildfeld auf eine feststehende Position in einem zweiten Bildfeld abgebildet wird.

## Revendications

1. Système optique pour diviser un faisceau de sortie d'un télescope et suivre un objet astronomique en cours d'examen se déplaçant dans le champ focal du télescope, **caractérisé en ce que** le système comporte un premier élément optique M10 pour diviser le faisceau de sortie au niveau d'un premier champ focal en deux faisceaux séparés, et un deuxième élément optique M11 placé dans au moins l'un des faisceaux divisés, ledit élément optique M11 étant mobile de sorte qu'une position de mouvement d'un objet dans le champ focal peut être représentée sur une position fixe.

2. Système optique selon la revendication 1, **caractérisé en ce que** le premier élément optique M10 représente la pupille du télescope sur un deuxième élément optique M11.

3. Système optique selon la revendication 1 ou 2, **caractérisé en ce que** le premier élément optique est un miroir de division M 10, ledit miroir de division comportant deux sections sphériques concaves attenantes qui ont des points focaux mutuellement non-coincidents.

4. Système optique selon l'une quelconque des revendications précédentes, **caractérisé en ce que** le miroir de division M10 est un miroir monobloc.

5. Système optique selon l'une quelconque des revendications précédentes, **caractérisé en ce que** l'élément optique M11 est muni de moyens d'actionnement pour incliner l'élément M11 autour de deux axes latéraux orthogonaux.

6. Système optique selon l'une quelconque des revendications précédentes, **caractérisé en ce que** le système comporte de plus un troisième élément optique M12 pour représenter à nouveau ledit objet astronomique dans le point focal d'un miroir parabolique M14.

7. Système optique selon l'une quelconque des revendications précédentes, **caractérisé en ce que** le troisième élément optique comporte un élément optique elliptique M12.

8. Système optique selon l'une quelconque des revendications précédentes, **caractérisé en ce qu'**un quatrième élément optique M13 représente à nouveau la pupille dans le faisceau de sortie du miroir parabolique M14.

9. Système optique selon la revendication 7, **caractérisé en ce que** le quatrième élément optique M13 est muni de moyens d'actionnement pour ajuster l'orientation du faisceau dans deux directions mutuellement orthogonales.

10. Système optique selon l'une quelconque des revendications précédentes, **caractérisé en ce que** les éléments optiques M10 à M14 sont montés sur un plan unique.

11. Système optique selon l'une quelconque des revendications précédentes, **caractérisé en ce que** les éléments optiques M10 à M14 sont des éléments optiques réflecteurs.

12. Système optique selon l'une quelconque des revendications précédentes, **caractérisé en ce que** l'élément elliptique M12 peut être ajusté axialement.

13. Système optique selon l'une quelconque des revendications précédentes, **caractérisé en ce qu'**au moins l'un des éléments optiques M10 à M14 est muni de moyens d'actionnement pouvant être ajustés par pilotage en boucle ouverte.

14. Système optique selon la revendication 12, **caractérisé en ce que** les moyens d'actionnement sont commandés via une table de consultation.

15. Système optique selon l'une quelconque des revendications précédentes, **caractérisé en ce qu'**au moins l'un des éléments optiques M10 à M14 est interchangeable.

16. Système optique selon l'une quelconque des revendications précédentes, **caractérisé en ce qu'**au moins deux éléments optiques M10', M10" sont montés sur une plate-forme pouvant être translatée, lesdits éléments optiques M10', M10", lorsqu'en position de montage, réfléchissant le faisceau de sortie du télescope dans deux canaux mutuellement opposés.

17. Procédé de division d'un faisceau de sortie d'un télescope et de suivi d'un objet astronomique en cours d'examen se déplaçant dans le champ focal du télescope, comportant les étapes consistant à :
- diviser le faisceau de sortie dans le champ focal d'un télescope en deux faisceaux divisés,
- dans l'un desdits faisceaux divisés, représenter la pupille du télescope sur un miroir mobile,
- calculer le mouvement de l'objet astronomique en cours d'examen, et
- délivrer en sortie des instructions de commande pour déplacer ledit miroir de sorte qu'une position de mouvement d'un objet astronomique dans le champ focal est représentée sur une position fixe dans un second champ focal.

18. Ordinateur, comportant des moyens de traitement, adapté pour :
- calculer le mouvement de l'objet astronomique en cours d'examen, et
- délivrer en sortie des instructions de commande pour déplacer le deuxième élément optique M11 dans un système selon l'une quelconque des revendications 1 à 16, de sorte qu'une position de mouvement d'un objet astronomique dans le champ focal est représentée sur une position fixe dans un second champ focal.
